# EUROPÄISCHE PATENTANMELDUNG

(11) **EP 2 039 975 A2**
(43) Veröffentlichungstag der Anmeldung: **25.03.2009**
(21) Anmeldenummer: 08163709.2
(22) Anmeldetag: 04.09.2008
(51) Int. Cl.: F16L 39/06

(54) **Radiale Drehdurchführung**

(30) Priorität: 11.09.2007 DE 102007043026
(71) Anmelder: GAT Gesellschaft für Antriebstechnik mbH, 65201 Wiesbaden (DE)
(72) Erfinder: HOFF, Dennis, 55124, Mainz (DE); OTT, Stephan, 65201, Wiesbaden (DE)
(74) Vertreter: Lieke, Winfried

(57) **Zusammenfassung**

Die vorliegende Erfindung betrifft eine radiale Drehdurchführung mit einer drehenden Welle, die mindestens zwei im wesentlichen axial verlaufende Kanäle (4, 4') aufweist, welche zum Umfang der Welle offene, radiale Übergangsöffnungen (5) haben, und mit mindestens einer die Welle (1) im Bereich der Übergangsöffnungen (5) dicht umfassende Gleitbuchse (2, 2a), welche für jeden der über die Buchse (2, 2a) anzuschließenden Kanäle (4, 4') mindestens je eine Zuführbohrung (6) aufweist, wobei die verschiedenen Kanäle (4, 4') ihre radialen Übergangsöffnungen (5) an unterschiedlichen axialen Positionen der Welle (1) haben. Um eine radiale Drehdurchführung der eingangs genannten Art zu schaffen, die eine geringe axiale Länge hat und durch welche trotz geringer Reibung die Leckraten gesenkt werden können und demnach die Gefahr eines Festfressens der Welle in der Buchse minimiert werden kann, wird erfindungsgemäß vorgeschlagen, dass die Drehdurchführung mindestens zwei Buchsen (2, 2a) aufweist, die für die Verbindung mit verschiedenen Kanälen (4, 4') in axial unterschiedlichen Positionen die Welle (1) umgreifen und die voneinander unabhängig in einer gemeinsamen Buchsenhalterung (10) gelagert sind, wobei mindestens eine der Buchsen mehrere radiale Zuführbohrungen (6, 6a, 6') hat.

## Beschreibung

Die vorliegende Erfindung betrifft eine radiale Drehdurchführung mit einer drehenden Welle, die mindestens zwei im Wesentlichen axial verlaufende Kanäle aufweist, welche zum Umfang der Welle offene radiale Übergangsöffnungen haben, und mit mindestens einer die Welle im Bereich der Übergangsöffnungen dicht umfassenden Gleitbuchse, welche für jeden der über die Buchse anzuschließenden Kanäle mindestens jeweils eine radiale Zuführbohrung aufweist, wobei die verschiedenen Kanäle ihre radialen Übergangsöffnungen an unterschiedlichen axialen Positionen der Wellen haben.

Radiale Drehdurchführungen dieser Art sind bereits seit langem bekannt.

Die entsprechenden radialen Zuführbohrungen in der Buchse liegen dabei auf der selben axialen Position wie eine radiale Übergangsöffnung desjenigen Kanals in der Welle, mit welchem die betreffende Zuführbohrung in Verbindung gebracht werden soll. Auf diese Weise kann ein Gas oder eine Flüssigkeit über die Zufuhrbohrung und die radiale Übergangsöffnung in den betreffenden Kanal der Welle eingebracht werden oder umgekehrt kann ein entsprechendes Fluid aus dem Kanal der Welle über die Übergangsöffnung in die Zuführbohrung und von dort in das zugehörige äußere Fluid-System übertreten.

Sehr häufig werden entsprechende Kanäle und Zuführbohrungen benötigt, um an einem Ende der Welle mit dieser verbundene hydraulisch betätigbare Elemente zu betätigen, indem entsprechendes Hydraulikfluid unter Druck zugeführt oder abgeführt wird. Zweckmäßigerweise ist jeweils in axialer Höhe eines Paares von Zuführöffnungen, das jeweils aus der entsprechenden Zuführbohrung und der radialen Übergangsöffnung des Kanals in der Welle besteht, eine im Bereich der Dichtungsflächen zwischen Welle und Buchse umlaufende Nut vorgesehen, so dass unabhängig von der relativen Drehposition der Übergangsöffnung bezüglich der Zuführbohrung kontinuierlich Fluid in den Kanal zugeführt bzw. aus dem Kanal abgeführt werden kann. Zur Trennung der verschiedenen Kanäle ist es demnach zwingend erforderlich, dass die verschiedenen Zuführbohrungen und auch die verschiedenen Übergangsöffnungen der unterschiedlichen Kanäle in axialer Richtung voneinander beabstandet sind,

Die Kanäle erstrecken sich im Wesentlichen in axialer Richtung durch die Welle hindurch, wobei es wahlweise um einen zentralen Kanal und/oder um konzentrisch um das Zentrum herum liegende, ringförmige Kanäle handeln kann, wahlweise aber auch in der Welle entsprechende axiale Bohrungen vorgesehen sein können, die je nach Länge der Welle entweder direkt durch Bohren hergestellt werden, oder ab z.B. dadurch, dass die Welle aus einem Kern und einer Hülse bzw. einem zentralen Rohr und einem Außenrohr zusammengesetzt ist, wobei in die Außenwand des inneren Kernes oder Rohres und/oder in die Innenwand des äußeren Rohres (die denselben Durchmesser haben) entsprechende Nuten eingefräst sind, die nach dem Zusammensetzen beider Teile einen entsprechenden axialen Kanal bilden.

Mitunter werden mehrere derartige Drehdurchführungen axial hintereinander an einer Welle plaziert, die an den jeweiligen Positionen dieser Drehdurchführungen die passenden radialen Zuführbohrungen und Übergangsöffnungen aufweist. Alternativ kann man in einer Buchse mehrere Übergangsbohrungen an unterschiedlichen axialen Positionen vorsehen. Eine Gruppe axial hintereinander angeordneter Drehdurchführungen beansprucht jedoch einen relativ langen Abschnitt der Welle. Eine Drehdurchführung mit einer Buchse mit einer Vielzahl radialer Zuführbohrungen, ist demgegenüber zwar kürzer, hat aber immer noch eine beträchtliche axiale Länge, da jeder der Kanäle einen gewissen axialen Raum beansprucht, weil die Übergangsöffnungen und die entsprechende Zuführbohrungen unterschiedlicher Kanäle jeweils an einer anderen axialen Position liegen müssen und weil die Nuten jeweils benachbarter Kanäle/Zuführbohrungen im Allgemeinen auch noch durch einen axial hinreichend langen Abschnitt einer Dichtfläche voneinander getrennt sein sollen. Es versteht sich, dass hierzu die Innenfläche der Buchse in relativ dichtem Gleiteingriff mit der Außenfläche der Welle stehen muss, wobei im Rahmen der vorliegenden Beschreibung diese Abschnitte von Buchse und Welle als Dichtflächen bezeichnet werden. Diese Dichtflächen sind zylindrische Innen- bzw. Außenflächen mit nahezu demselben Durchmesser, so dass sie unmittelbar aufeinander gleiten können, wenn eines der beiden Teile relativ zum andern rotiert, wobei im Allgemeinen die Welle als das drehende Maschinenteil ausgebildet ist. Grundsätzlich könnte aber auch die Welle mit einem stehenden Maschinenteil verbunden sein, während die Buchse mit einem rotierenden Maschinenteil verbunden wäre, wobei in diesem Falle allerdings die axialen Kanäle in der Buchse angeordnet sein sollten und die radialen Zufuhrbohrungen in der Welle, die dann zweckmäßigerweise eine Hohlwelle wäre, angeordnet sein müssten.

Es versteht sich, dass bei einer großen Anzahl von Kanälen und einer entsprechend großen Anzahl von Übergangsöffnungen und Zuführbohrungen auch die axiale Länge der Buchse entsprechend groß sein muss, und dass es im Allgemeinen schwierig ist, zwei Bauteile über eine relativ große axiale Länge hinweg mit konstant gleichen Durchmessern zu versehen, so dass die so hergestellten Dichtflächen einen nur sehr engen Dichtspalt bilden und z.B. über einen aus den Kanälen bzw. Zuführbohrungen abgeleiteten Film aus einem Fluid gleiten, ohne dass die Reibung zwischen Buchse und Welle zu groß wird und eine möglicherweise zu starke Erhitzung der Gleitdichtflächen und auch der Umgebung einschließlich der durchzuleitenden Fluide bewirken würde. Dennoch ist aber der Dichtspalt so eng wie möglich zu gestalten, damit die ansonsten unvermeidlichen Leckraten möglichst gering sind und sich auch Fluide aus verschiedenen Kanälen nicht miteinander mischen, und es auch nicht zu einer wechselseitigen Druckbeaufschlagung benachbarter Kanäle kommt.

Im Allgemeinen wird eine entsprechende Buchse zum Ausgleich etwaiger Toleranzen der Dichtflächen "schwimmend" gelagert, d.h. sie wird so gelagert, dass sie einen (wenn auch geringen) radialen und axialen Bewegungsspielraum erhält. Toleranzabweichungen der Dichtflächen, die einen entsprechenden radialen Bewegungsraum erfordern, bedeuten allerdings zwingend auch, dass das Spiel bzw. der Dichtungsspalt zwischen den Dichtflächen stellenweise relativ groß ist, so dass auch die Leckraten entsprechend größer sind. Ein zu großer axialer Bewegungsspielraum kann zu einer Verkippung bzw. einem Verkanten der Buchse führen, so dass diagonal gegenüberliegende innere Kanten der Buchse in einen zu starken Reibeingriff mit der Welle geraten, wodurch die Welle sich unter ungünstigen Umständen in der Buchse festfressen kann.

Gegenüber diesem Stand der Technik liegt der vorliegenden Erfindung die Aufgabe zugrunde, eine radiale Drehdurchführung der eingangs genannten Art zu schaffen, die eine geringe axiale Länge hat und durch welche trotz geringer Reibung die Leckraten gesenkt werden können und demnach die Gefahr eines Festfressens der Welle in der Buchse minimiert werden kann.

Diese Aufgabe wird dadurch gelöst, dass die Drehdurchführung mindestens zwei Buchsen aufweist, die für die Verbindung mit verschiedenen Kanälen an axial unterschiedlichen Positionen die Welle umgreifen, und die voneinander unabhängig in einer gemeinsamen Buchsenhalterung gelagert sind, wobei mindestens eine der Buchsen mehrere radiale Zuführbohrungen hat.

Es versteht sich, dass die an Stelle einer vorher einzigen Buchse nunmehr vorgesehenen mehreren Buchsen jede für sich axial deutlich kürzer sein können, ohne in der Summe nennenswert länger zu sein als eine Einzelbuchse mit einer entsprechenden Vielzahl von Zuführbohrungen, wobei sich die Bedingung der mit engen Toleranzen herzustellenden Dichtflächen auf der entsprechend kürzeren axialen Länge leichter erfüllen lässt. Bei ein und demselben Verkantungswinkel sind außerdem die Auslenkungen der Kanten einer kürzeren Buchse entsprechend geringer sind als bei einer längeren Buchse. Dies setzt aber auch voraus, dass jede der Buchsen von der bzw. den anderen unabhängig in einer der gemeinsamen Buchsenhalterung gelagert ist, wobei jede der Buchsen ihre eigene, separate (axiale) Lagerung oder Abstützung aufweisen kann, wobei diese Lager oder Abstützungen verschiedener Buchsen jedoch auch miteinander verbunden sein können und in jedem Fall Teil derselben gemeinsamen Halterung sind.

Gleichzeitig bedeutet jedoch die erfindungsgemäße Lagerung der Buchsen in einer gemeinsamen Buchsenhalterung, daß diese Drehdurchführung insgesamt axial erheblich kürzer ist als eine Reihe individueller Drehdurchführungen mit jeweils einer eigenen Halterung axial hintereinander auf der Welle.

Gemäß einer Ausführungsform der Erfindung ist vorgesehen, dass die Halterung ein die Buchsen gemeinsam umfassendes Gehäuse ist, das für jede der Buchsen unabhängige Lagerelemente aufweist. Es versteht sich, dass die Zahl der Buchsen beliebig wählbar ist, wobei es für praktische Zwecke ausreichen dürfte, wenn man die bisher bekannten, relativ langen Buchsen für eine große Zahl von Kanälen (bis zu zehn oder gar mehr Kanäle) durch nur zwei oder maximal drei Buchsen ersetzt, die jeweils mehrere und in der Summe die gleiche Zahl von Zuführbohrungen haben, wie die entsprechende längere Buchse, um die Vorteile der folgenden Erfindung auszunutzen. Theoretisch wäre es selbstverständlich auch möglich, jedem einzelnen Kanal eine eigene Buchse zuzuordnen, die aber alle in der gemeinsamen Halterung unterzubringen wären.

Mindestens ein Teil der Buchsen ist gemäß einer Ausführungsform der vorliegenden Erfindung in axialer Richtung federnd in ihrer Halterung gelagert, wobei es zur Gewährleistung einer geringen Baulänge zweckmäßig, aber für die unabhängige Lagerung auch ausreichend ist, wenn in der Praxis die entsprechenden, ggf. erforderlichen Federwege sehr kurz sind, so dass gemäß einer Ausführungsform derartige Federn zum Beispiel aus leicht gewellten Federringen oder konisch geformten Blechfederringen oder dergleichen bestehen. Die Verwendung anderer und axial längerer Federn ist selbstverständlich nicht ausgeschlossen. Die Lagerelemente für die einzelnen Buchsen können axial sehr kurz gehalten werden und beispielsweise aus einem Bund oder einem in die Halterung ein- bzw. auf die Welle aufgesetzten Sprengring bestehen, der auf der einer Buchse zugewandten Seite, gegebenenfalls auf beiden Seiten, einen Wellenfederring oder einen Konusfederring aufweisen kann, um die jeweilige Buchse unabhängig und mit geringem axialen Spiel abzustützen bzw. zu lagern.

Wie es im Prinzip auch bereits aus dem Stand der Technik bekannt ist, ist gemäß einer Ausführungsform der vorliegenden Erfindung vorgesehen, dass die radialen Übergangsöffnungen und die Zufuhrbohrungen in an dem Übergang der Dichtflächen von Welle und Buchse jeweils vorgesehene Nuten münden, wobei jeweils einem aus einer Zuführbohrung und einer Übergangsöffnung bestehenden Paar von Öffnungen jeweils eine Nut zugeordnet ist. Damit ist die Zufuhr und Abfuhr von Fluid in die Kanäle bzw. aus den Kanälen unabhängig von der relativen Drehposition der Welle zu der betreffenden Buchse gewährleistet. Theoretisch könnte die Nut sowohl in der Außenfläche der Welle als auch in der Innenfläche der betreffenden Buchse vorgesehen sein, gemäß einer Ausführungsform der vorliegenden Erfindung ist jedoch die betreffende Nut entweder nur in der Innenfläche der Buchse oder nur in der Außenfläche der Welle vorgesehen. Es versteht sich, dass dadurch die Herstellung von Buchse und Welle weniger aufwendig wird, wenn nur in einem der beiden Teile die umlaufenden Nuten ausgebildet werden müssten.

Weiterhin ist gemäß einer Ausführungsform der vorliegenden Erfindung vorgesehen, dass zwischen mindestens einem Teil der axial benachbarten Zuführbohrungen radiale Entlastungsbohrungen vorgesehen sind, die in Fließverbindung mit einem Leckkanal stehen, der für mindestens einen Teil der Entlastungsbohrungen gemeinsam vorgesehen ist. Der betreffende Leckkanal verläuft dann zweckmäßigerweise in axialer Richtung in einer Buchse oder auch außerhalb der Buchse, beispielsweise in dem dicht mit den Buchsen verbundenen Gehäuse.

Auch derartige Entlastungsbohrungen sollten zweckmäßigerweise am Übergang der Dichtungsflächen zwischen Welle und Buchse durch umlaufende Nuten miteinander verbunden sein. Diese Entlastungsbohrungen münden also ebenfalls in eine Nut, wobei auch im Falle der für die Entlastungsbohrung vorgesehenen Nut diese gemäß einer Ausführungsform entweder nur in der Innenfläche der Buchse oder nur in der Außenfläche der Welle vorgesehen ist. Zweckmäßigerweise sollten die Nuten für die Überführung von Fluiden ebenso wie die Nuten der Entlastungsbohrungen jeweils in dem selben Bauteil ausgebildet sein. Mindestens ein Teil der Entlastungsbohrungen ist dabei mit demselben axialen Entlastungskanal innerhalb der Buchse bzw. innerhalb des Gehäuses verbunden, wobei je nach der Eigenschaft der Fluide, die durch die Entlastungsbohrungen abgeführt werden müssen, auch sämtliche Entlastungsbohrungen mit ein und demselben Entlastungskanal verbunden sein können. Dies gilt insbesondere bei identischen Fluiden wie z.B. in dem Fall, dass die Kanäle sämtlich für hydraulische Betätigungselemente vorgesehen sind, die alle mit demselben Hydraulikfluid (oder im Fall einer Pneumatik mit Luft bzw. Gas) betrieben werden. Auch dann haben die Entlastungsbohrungen jedoch noch insofern einen Sinn, weil sie die benachbarten Zuführbohrungen auch drucktechnisch entkoppeln, d.h. ein relativ hoher Druck in einem der Fluidkanäle, der permanent aufrecht erhalten wird, kann nicht über das zwischen den Dichtflächen verbleibende, unvermeidliche Leck auf den mit den der benachbarten Zuführbohrung verbundenen Kanal übertragen werden, da der Entlastungskanal zuvor schon für eine Druckentlastung sorgt.

Darüber hinaus ist es zweckmäßig, wenn auch zwischen benachbarten Buchsen jeweils ein Leckraum zum Auffangen und Ableiten von Leckflüssigkeiten bzw. Leckfluiden vorgesehen ist. Dies erreicht man einfach durch einen entsprechenden Abstand der Lagerelemente benachbarter Buchsen, der relativ gering bleiben kann, so dass aber auf jeden Fall zwischen den Buchsen ein umlaufender Ringraum verbleibt, der als Leckraum dienen kann.

Der durch Abstände für Entlastungsbohrungen und zusätzliche Lagerelemente zwischen Buchsen etwas erhöhte Platzbedarf gegenüber einer einzelnen Buchse mit derselben Kanalzahl mach in der Praxis nicht mehr als 5% bis maximal 10% aus, so daß die Vorteile der verbesserten Passung der Buchsen auf jeden Fall überwiegen.

Gemäß einer Ausführungsform der Erfindung sind die Buchsen in axialer Richtung zwischen äußeren Kugellagerringen zweier die Welle drehbar lagernder Kugellager federnd vorbelastet verspannt. Dies führt in jeder Lage zur Einstellung einer gewissen Gleichgewichtsposition, in der die Welle zentriert bleibt, auch wenn beispielsweise die Drehdurchführung mit ihrer zentralen Achse nicht horizontal, sondern vertikal ausgerichtet ist, wobei hier die Federelemente unterhalb der Buchsen, beispielsweise in Form von gewellten Ringen, auch noch durch das Gewicht der Buchsen zusätzlich belastet werden; dabei sollten aber die Federn so gewählt werden, dass auch in dieser Position die oberen (nicht durch das Gewicht de Buchsen belasteten) Federn ebenfalls noch gespannt sind, wenn auch entsprechend geringer, da sie nicht mehr durch das Gewicht der Buchse belastet werden, sondern nur dadurch, dass die axiale Länge der Buche größer ist als der lichte Abstand zwischen den Federn im unbelasteten Zustand und auch der Federweg durch das Gewicht der Buchse entsprechend kurz gehalten wird.

Die Welle bzw. der die Dichtflächen aufweisende Abschnitt der Welle ist gemäß einer Ausführungsform der Erfindung zwischen den Innenringen der Kugellager axial eingespannt, wobei an den axialen Enden des die Buchsen aufnehmenden Gehäuses zusätzlich noch zwei Gleitringdichtungen an dem Gehäuse angeordnet sind und axial außerhalb der Buchsen (und axial außerhalb der Kugellager) mit der Oberflächen der Welle in dichtenden Eingriff treten. Auch diese Dichtungen können noch mit einem Leckraum verbunden sein, so dass etwaiges Fluid, welches sich an diesen Dichtungen auf der den Buchsen zugewandeten Innenseite ansammelt, abgeführt werden kann.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: Einen axialen Längsschnitt durch eine radiale Drehdurchführung gemäß der vorliegenden Erfindung, welche zwei Buchsen aufweist,
- Figur 2: eine Ansicht auf einen Schnitt gemäß der Linie II-II in Figur 1

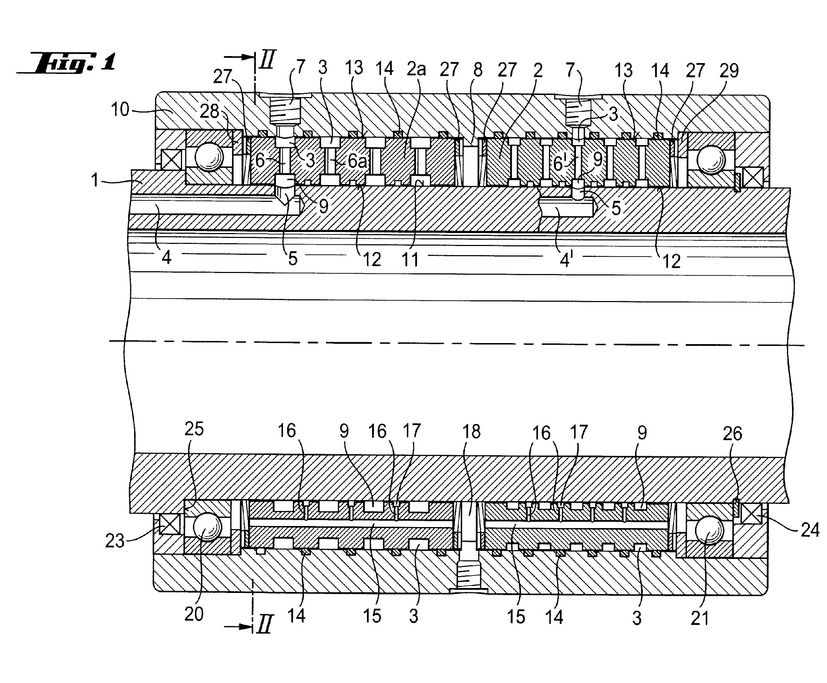

Man erkennt in Figur 1 eine drehbare Welle 1, die im vorliegenden Fall als Hohlwelle ausgestaltet ist und die gemäß einer Ausführungsform der Erfindung einen relativ großen Außendurchmesser von mehr als 100 mm und z.B. von 300 mm haben kann, wobei sich dieses Maß hier auf den Durchmesser der Dichtfläche 11 bezieht.

Die Welle 1 wird über zwei Kugellager 20, 21 an bzw. in einem Gehäuse 10 gelagert, wobei die Welle für den Eingriff mit den inneren Kugellagerringen von Kugellagern 20, 21 an einem Ende einen Absatz 25 und am anderen Ende einen Sicherungsring 26 aufweist. Die axiale Lage der Welle 1 relativ zu dem Gehäuse 10 ist damit fixiert. Auch die axiale Position der Kugellager 20, 21 in dem Gehäuse 10, genauer gesagt der entsprechenden äußeren Lagerringe, ist selbstverständlich durch entsprechende Absätze bzw. Sicherungsringe am Gehäuse 10 festgelegt. Zwischen den Kugellagern 20, 21 erkennt man axial hintereinander zwei Buchsen 2, 2a, die über Federelemente 27 und Lagerelemente 8, 28 und 29 (welche zum Teil wiederum Sicherungsringe oder dergleichen sind) in axialer Richtung vorgespannt in dem Gehäuse 10 bzw. zwischen den Außenringen der im Gehäuse abgestützten Kugellager 20, 21 und dem Bund 8 zwischen den Buchsen 2, 2a, gelagert sind. Federelemente 27 sind auch auf den den Buchsen zugewandten Seiten der Sicherungsringe 28, 29 vorgesehen. Dabei haben die Buchsen 2, 2a in axialer Richtung ein durch die Ausgestaltung der Federelemente 27 bestimmtes, kleines axiales Spiel.

Die Buchsen weisen jeweils Zuführbohrungen 6, 6a, 6' auf, die in Figur 1 allesamt in die Ebene der Zeichnung verlagert wurden und in dem oberen Teil des Schnittbildes durch die Buchse erkennbar sind. Auch die Entlastungsbohrungen 16 sind allesamt in die Ebene der Zeichnung verlegt worden und sind dementsprechend in der unteren Hälfte, d. h. den Zuführbohrungen 6 diametral gegenüberliegend, in den Buchsen 2, 2a dargestellt.

Es versteht sich, dass die Zuführbohrungen 6, 6a, 6' und die Entlastungsbohrungen 16 zwar auch tatsächlich in einer durch dieselbe Winkelrichtung und die Achse aufgespannten, gemeinsamen Ebene liegen könnten, dass es jedoch aus praktischen Gründen häufig zweckmäßig ist, diese Bohrungen in Umfangsrichtung an unterschiedliche Winkelpositionen zu verlagern.

Die Buchsen 2, 2a weisen im Bereich jeder Zuführbohrung 6, 6a, 6' an ihrer inneren Dichtfläche 12 jeweils eine umlaufende Nut 9 auf, welche unabhängig von der relativen Winkelposition zwischen der radialen Übergangsöffnung 5 und der Zuführbohrung 6 die Verbindung zwischen der Zuführbohrung 6 und dem zugehörigen Kanal 4 gewährleistet. Dabei sind beispielsweise einige Kanäle 4' der Welle 1 mit den Nuten 9 der Buchse 2 verbunden, die zu den in der oberen Bildhälfte erkennbaren Zuführbohrungen gehört, von denen eine mit 6' bezeichnet ist während andere Kanäle 4 mit den Nuten 9 der Buchse 2a verbunden sind, die zu den mit 6 oder 6a bezeichneten Zuführbohrungen der Buchse 2a gehören. Jede der Zuführbohrungen 6, 6a, 6' ist deshalb jeweils mit einem anderen, in der Welle 1 axial verlaufenden Kanal verbunden, wobei außer den Kanälen 4 und 4' in Figur 1 die übrigen Kanäle nicht erkennbar sind, weil sie an anderen Umfangspositionen liegen als die im Schnitt dargestellten Kanäle 4, 4'. Die Nuten 9 könnten alternativ oder zusätzlich auch in der zylindrischen Außenfläche bzw. Dichtfläche 11 der Welle 1 vorgesehen sein.

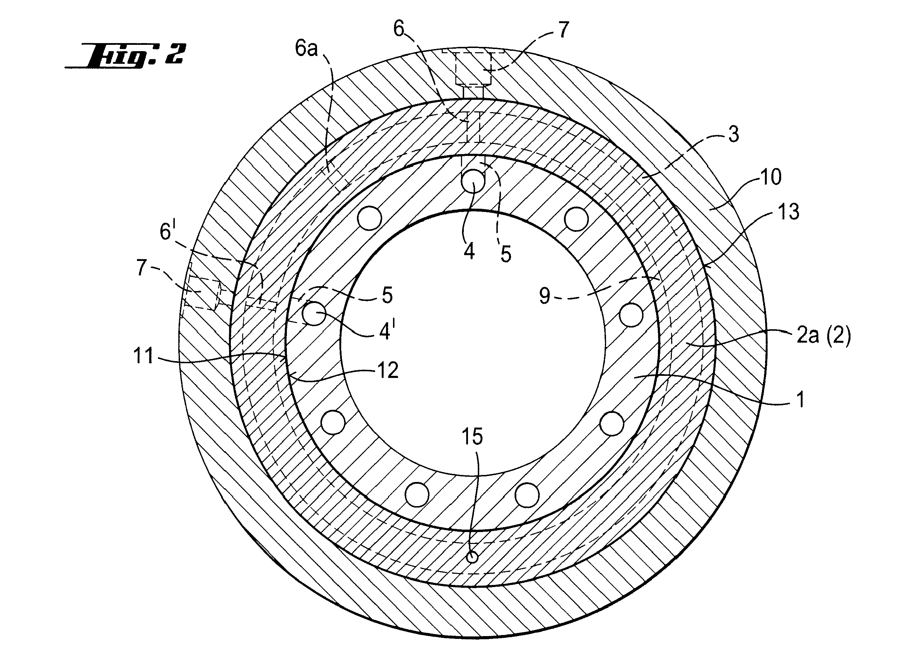

Figur 2 zeigt eine stirnseitige Ansicht der Drehdurchführung, entsprechend einer Ansicht auf die Drehdurchführung in Figur 1 von links. Man erkennt im Zentrum die Hohlwelle 1. Des Weiteren erkennt man mehrere axial in der Welle 1 vorgesehene Bohrungen, von denen hier nur zwei der Bohrungen mit dem Bezugszeichen 4, 4' versehen sind, welche gemäß Figur 1 mit den dort mit 6 bzw. 6' bezeichneten Zuführbohrungen Verbindung haben.

Man erkennt außerdem in Figur 2 die Lage der Dichtungsflächen 11, 12 der Welle 1 bzw. der Buchsen 2, 2a, die durch eine gemeinsame Kreislinie wiedergegeben sind.

In Figur 1 erkennt man außerdem, daß in den Buchsen 2, 2a zwischen axial benachbarten Zuführbohrungen 6, 6a und 6' radiale Entlastungsbohrungen 16 vorgesehen sind, die in Fließverbindung mit einem sich axial erstreckenden Leckkanal 15 stehen, der für mindestens einen Teil der Entlastungsbohrungen 16 ein gemeinsamer Leckkanal ist. Dieser Leckkanal 15 mündet in einen Leckraum 18, der zwischen den beiden Buchsen 2, 2a zum Auffangen und Ableiten von Leckflüssigkeiten vorgesehen ist. Dabei ist mindestens jeweils ein Teil der Entlastungsbohrungen mit demselben axialen Entlastungskanal 15 innerhalb der Buchse 2, 2a verbunden.

Auch die Entlastungsbohrungen 16 sind mit umlaufenden Nuten 17 am Übergang der Dichtungsflächen 11, 12 zwischen Welle 1 und Buchse 2, 2a verbunden, die entlang des gesamten Umfangs der Welle etwaiges Fluid, das aus einer unmittelbar benachbarten Nut 9 zwischen den Dichtflächen 11, 12 hindurchdringt, abfangen.

An den axialen Enden des die Buchsen aufnehmenden Gehäuses 10 sind Gleitringdichtungen 23, 24 an dem Gehäuse (10) angeordnet und stehen axial außerhalb der Buchsen (2, 2a) mit der Oberfläche der Welle 1 in Eingriff.

Die Buchsen 2, 2a sind durch elastomere Dichtungen 14 abgedichtet in dem Gehäuse 10 aufgenommen, wodurch die Buchse im Wesentlichen drehfest in dem Gehäuse 10 fixiert sind. Die Dichtungen 14 trennen dabei die einzelnen Nuten 3 auf der Außenseite 13 der Buchsen 2, 2a, um auch dort einen Übertritt von Leckfluid zwischen den einzelnen Kanälen zu vermeiden. Das Gehäuse 10 weist radiale Zuführbohrungen 7 für die Verbindung mit den entsprechenden Zuführbohrungen 6, 6a, 6' der Buchsen 2, 2a auf, die ebenfalls an unterschiedlichen Winkelpositionen vorgesehen sein können, so daß in Figur 1 nur eine derartige Zuführbohrung 7 sichtbar ist. Die Nuten 3 in der Außenfläche 13 der Buchsen 2, 2a und/oder der Innenfläche des Gehäuses 10 stellen wiederum eine Verbindung zwischen den Zuführbohrungen 7 des Gehäuses und den radialen Zuführbohrungen 6, 6a, 6' der Buchsen 2, 2a sicher, auch wenn die Umfangswinkelpositionen der Bohrungen 7, 6 etc. nicht übereinstimmen.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

### Bezugszeichenliste

- 1: Welle
- 2: Buchse
- 2a: Buchse
- 3: Nut
- 4: Kanal
- 4': Kanal
- 5: radiale Übergangsöffnung
- 6: Zuführbohrung
- 6a: Zuführbohrung
- 6': Zuführbohrung
- 7: Zuführbohrung
- 8: Bund
- 9: Nut
- 10: Gehäuse
- 11: Dichtfläche
- 12: Dichtfläche
- 13: Außenfläche
- 14: elastomere Dichtungen
- 15: Leckkanal
- 16: Entlastungsbohrung
- 17: Nut
- 18: Leckraum
- 19:
- 20: Kugellager
- 21: Kugellager
- 22:
- 23: Gleitringdichtung
- 24: Gleitringdichtung
- 25: Absatz
- 26: Sicherungsring
- 27: Federelement
- 28: Lagerelement
- 29: Lagerelement

## Patentansprüche

1. Radiale Drehdurchführung mit einer drehenden Welle, die mindestens zwei im wesentlichen axial verlaufende Kanäle (4, 4') aufweist, welche zum Umfang der Welle offene, radiale Übergangsöffnungen (5) haben, und mit mindestens einer die Welle (1) im Bereich der Übergangsöffnungen (5) dicht umfassende Gleitbuchse (2, 2a), welche für jeden der über die Buchse (2, 2a) anzuschließenden Kanäle (4, 4') mindestens je eine Zuführbohrung (6) aufweist, wobei die verschiedenen Kanäle (4, 4') ihre radialen Übergangsöffnungen (5) an unterschiedlichen axialen Positionen der Welle (1) haben, **dadurch gekennzeichnet, dass** die Drehdurchführung mindestens zwei Buchsen (2, 2a) aufweist, die für die Verbindung mit verschiedenen Kanälen (4, 4') in axial unterschiedlichen Positionen die Welle (1) umgreifen und die voneinander unabhängig in einer gemeinsamen Buchsenhalterung (10) gelagert sind, wobei mindestens eine der Buchsen mehrere radiale Zuführbohrungen (6, 6a, 6') hat.

2. Radiale Drehdurchführung nach Anspruch 1, **dadurch gekennzeichnet, dass** die Halterung ein die Buchsen (2a, 2b) gemeinsam umfassendes Gehäuse (10) ist, das für jede der Buchsen (2a, 2b) unabhängige Lagerelemente (8, 27, 28, 29) aufweist.

3. Radiale Drehdurchführung nach Anspruch 1 oder 2, **dadurch gekennzeichnet, dass** mindestens ein Teil der Buchsen (2, 2a) in axialer Richtung federnd in der Halterung gelagert ist.

4. Radiale Drehdurchführung nach einem der Ansprüche 1 bis 3, **dadurch gekennzeichnet, dass** die radialen Übergangsöffnungen (5) und die Zuführbohrungen (6) in in den Dichtflächen (11, 12) von Welle (1) und/oder Buchse (2, 2a) vorgesehene, umlaufende Nuten (9) münden.

5. Radiale Drehdurchführung nach Anspruch 4, **dadurch gekennzeichnet, dass** eine zu einem Paar aus einer Übergangsöffnung (5) und einer Durchführung (6) gehörige Nut (9) entweder in der Innenfläche der Buchse (2, 2a) oder in der Außenfläche der Welle (1) vorgesehen ist.

6. Radiale Drehdurchführung nach einem der Ansprüche 1 bis 5, **dadurch gekennzeichnet,**
**dass** in der Buchse (2, 2a) zwischen axial benachbarten Zuführbohrungen (6, 6a) radiale Entlastungsbohrungen (16) vorgesehen sind, die in Fließverbindung mit einem Leckkanal (15) stehen, der für mindestens einen Teil der Entlastungsbohrungen ein gemeinsamer Leckkanal ist.

7. Radiale Drehdurchführung nach Anspruch 6, **dadurch gekennzeichnet, dass** die Entlastungsbohrungen (16) mit umlaufenden Nuten (17) am Übergang der Dichtungsflächen (11, 12) zwischen Welle (1) und Buchse (2, 2a) verbunden sind.

8. Radiale Drehdurchführung nach einem der Ansprüche 6 oder 7, **dadurch gekennzeichnet, dass** mindestens jeweils ein Teil der Entlastungsbohrungen mit demselben axialen Entlastungskanal (15) innerhalb der Buchse (2, 2a) verbunden ist.

9. Radiale Drehdurchführung nach einem der Ansprüche 1 bis 8, **dadurch gekennzeichnet, dass** zwischen den mindestens zwei Buchsen ein Leckraum (18) zum Auffangen und Ableiten von Leckflüssigkeiten vorgesehen ist.

10. Radiale Drehdurchführung nach einem der Ansprüche 1 bis 9, **dadurch gekennzeichnet, dass** die Buchsen (2, 2a) in axialer Richtung zwischen äußeren Kugellagerringen zweier die Welle drehbar lagernden Kugellager (20, 21) federn vorbelastet verspannt sind.

11. Radiale Drehdurchführung nach Anspruch 10, **dadurch gekennzeichnet, dass** die Welle bzw. ein Abschnitt der Welle zwischen den Innenringen des Kugellagers (20, 21) axial eingespannt ist, wobei an den axialen Enden des die Buchsen aufnehmenden Gehäuses (10) Gleitringdichtungen (23, 24) an dem Gehäuse (10) angeordnet sind und axial außerhalb der Buchsen (2, 2a) mit der Oberfläche der Welle (1) in Eingriff stehen.

12. Radiale Drehdurchführung nach einem der Ansprüche 1 bis 11, **dadurch gekennzeichnet, dass** die Buchsen 2, 2a durch elastomere Dichtungen abgedichtet in dem Gehäuse (10) aufgenommen sind, wobei das Gehäuse (10) radiale Zuführbohrungen (7) für die Verbindung mit den entsprechenden Zuführbohrungen (6, 6a, 6') der Buchsen (2, 2a) aufweist.
